(19) Europäisches Patentamt / European Patent Office / Office européen des brevets

(11) **EP 2 623 555 B1**

(12) **EUROPEAN PATENT SPECIFICATION**

(45) Date of publication and mention
of the grant of the patent:
**25.11.2015 Bulletin 2015/48**

(51) Int Cl.:
*C08L 23/26* (2006.01)   *C08J 11/06* (2006.01)
*C08K 3/00* (2006.01)   *C08L 23/00* (2006.01)

(21) Application number: **11828775.4**

(22) Date of filing: **13.09.2011**

(86) International application number:
**PCT/JP2011/070828**

(87) International publication number:
**WO 2012/043215 (05.04.2012 Gazette 2012/14)**

(54) **RESIN COMPOSITION AND MOLDED ARTICLE**

HARZZUSAMMENSETZUNG UND FORMARTIKEL

COMPOSITION DE RÉSINE ET OBJET MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2011 JP 2011055569
29.09.2010 JP 2010219508**

(43) Date of publication of application:
**07.08.2013 Bulletin 2013/32**

(73) Proprietor: **Sekisui Chemical Co., Ltd.
Osaka 530-8565 (JP)**

(72) Inventors:
• **NISHIOKA, Takuya
Kyoto-shi
Kyoto 601-8105 (JP)**
• **HIRAYAMA, Kenji
Saijo-shi
Ehime 793-0072 (JP)**
• **NAKAMURA, Akira
Kyoto-shi
Kyoto 601-8105 (JP)**

(74) Representative: **Ter Meer Steinmeister & Partner
Patentanwälte mbB
Nymphenburger Straße 4
80335 München (DE)**

(56) References cited:
**EP-A1- 1 464 667   JP-A- 2003 238 223
JP-A- 2003 287 081   JP-A- 2005 098 427
JP-A- 2006 142 755   JP-A- 2006 312 747**

## Description

### TECHNICAL FIELD

The present invention relates to a resin composition containing a polyolefin resin, and a molded article obtainable by molding the resin composition. More specifically, the present invention relates to a resin composition having favorable moldability and excellent water resistance, and a molded article obtainable by molding the resin composition.

### BACKGROUND ART

Polyolefin resin is comparatively inexpensive and has excellent moldability, heat resistance, mechanical properties, and appearance. Accordingly, the polyolefin resin is processed into various molded articles and used in various fields. For example, materials containing the polyolefin resin are molded into molded articles by any molding method such as extrusion molding to be used as deck materials and the like.

Patent document 1 discloses, as an exemplary material of the molded articles, a composite material containing a recycled material of containers/packages which is a thermoplastic resin, a maleic anhydride-modified thermoplastic resin, and inorganic powder. Patent document 1 teaches that use of a maleic anhydride-modified thermoplastic resin gives a reinforcing effect at an interface between the thermoplastic resin and the inorganic powder, leading to higher adhesion between the thermoplastic resin and the inorganic powder.

As a method for enhancing the compatibility among organic/inorganic composite materials other than the use of a maleic anhydride-modified thermoplastic resin, known is use of a silane-modified polyolefin resin in the field of resin-coated metal bodies. For example, Patent document 2 discloses a resin-coated metal body in which a silane graft-modified polyolefin resin is used.

The molded articles used as deck materials are likely to be used in a state of being immersed in water or having water attached thereto due to continual rain. Accordingly, the molded articles are strongly required to have water resistance.

Also, the molded articles used as deck materials are likely to be used under severe sunshine conditions of outdoors. Accordingly, the molded articles may be required to have high strength and size stability.

A molded article produced from a maleic anhydride-modified thermoplastic resin as disclosed in Patent document 1, however, tends to have the strength lowered when used in a state of being immersed in water or having water attached thereto. Namely, the molded article disclosed in Patent document 1 problematically has comparatively low water resistance.

Patent document 2 only discloses the silane-modified polyolefin resin as a material for coating a metal body. Even if a material containing the silane-modified polyolefin resin disclosed in Patent document 2 is extruded from a die of an extruding machine for producing an extrusion-molded article, dice scraps called gum may be generated in the die and be accumulated in the die over time. Moreover, the dice scraps accumulated in the die may be carbonized. As a result, an extrusion-molded article extruded from the die tends to have dice scraps or carbonated matters thereof attached thereto, resulting in an adverse effect on the appearance and mechanical properties of the extrusion-molded article. Additionally, molding cannot be continuously performed for a long time and cleaning of the die is needed at a frequency of about once in half a day, resulting in poor productivity of the extrusion-molded article.

JP 2005-98427 is directed to a ring-shaped part including an inorganic filler and a resin, wherein the content ratio of resin to the total volume is 40 vol% or less, wherein the inorganic filler is mixed powder of inorganic powder having an average grain size of 5 to 50 $\mu$m, and wherein the ring-shaped part is formed by uniformly mixing the inorganic filler with a resin, and molding the obtained mixture into a prescribed form.

JP 2006-142755 is directed to an ink-jet recording head comprising a supporting member which is formed of a thermoplastic water-setting composition containing a thermoplastic resin which causes a cross-linkage reaction in contact with water.

EP 1 464 667 is directed to a thermoplastic water-curable composition comprising a thermoplastic resin which upon contact with water undergoes a cross-linking reaction and thus comes to have a high molecular weight, desirably one having silane groups in inner parts thereof, and a water-curable composition, the amount of water-curable composition being desirably 200 to 700 parts by weight per 100 parts by weight of resin.

For avoiding accumulation of a crosslinked resin, use of a screw having a special shape in production of an extrusion-molded article is disclosed. In such a case, however, the molding process is limited. Moreover, the screw disclosed in Patent Document 3 may not be appropriate to be used in a common molding process such as extrusion molding.

CITATION LIST

Patent Documents

[Patent Document 1] JP 2007-138137 A
[Patent Document 2] JPH 06(1994)-210796 A
[Patent Document 3] JP 2000-263630 A

## SUMMARY OF THE INVENTION

## PROBLEMS TO BE SOLVED BY THE INVENTION

The present invention aims to provide a resin composition having favorable moldability and high water resistance, and a molded article obtainable by molding the resin composition.
An limitative aim of the present invention is providing a resin composition having not only favorable moldability and high water resistance but also high size stability, and a molded article obtainable by molding the resin composition.
A further limited aim of the present invention is providing a resin composition having not only favorable moldability and high water resistance but also high strength, and a molded article obtainable by molding the resin composition.

## MEANS FOR SOLVING THE PROBLEMS

A broad aspect of the present invention is a resin composition according to claim 1.
According to an aspect of the present invention, an amount of the inorganic powder is 70% by weight or more, and an amount of the silane-modified polyolefin resin is 1% by weight or more but 30% by weight or less.
A molded article according to the present invention is obtainable by molding the resin composition prepared in accordance with the present invention.
In one embodiment, the molded article is deck materials

## EFFECT OF THE INVENTION

The resin composition according to the present invention contains inorganic powder and a silane-modified polyolefin resin, wherein the inorganic powder is fly ash or incineration ash of sludge, wherein the amount of the inorganic powder being fly ash or incineration ash of sludge is 60% by weight or more, and an amount of the silane-modified polyolefin resin is 1% by weight or more but 40% by weight or less, so as to have fine moldability and high water resistance.

## MODES FOR CARRYING OUT THE INVENTION

The following will specifically discuss the present invention.
The resin composition according to the present invention contains inorganic powder and a silane-modified polyolefin resin. The amount of the inorganic powder is 60% by weight or more in 100% by weight of the resin composition according to the present invention. The amount of the inorganic powder is preferably 70% by weight or more in 100 % by weight of the resin composition according to the present invention.
Molded articles used as deck materials are sometimes used in a state of being immersed in water or having water attached thereto due to continual rain. Accordingly, the molded articles are strongly required to have water resistance.
The present inventors have found out that employment of a composition containing inorganic powder and a silane-modified polyolefin resin in which the amount of the inorganic powder is 60% by weight or more allows maintenance of favorable moldability and enhancement of water resistance.
The molded articles used as deck material are often used under severe sunshine conditions of outdoors. Accordingly, the molded articles may be required to have high strength (high stress) and high size stability (low coefficient of linear expansion). In addition, molded articles may be desired to have a flawless and smooth surface.
The present inventors have found out that employment of a composition containing inorganic powder and a silane-modified polyolefin resin in which the amount of the inorganic powder is 70% by weight or more allows securement of high strength and high size stability, maintenance of favorable moldability, and enhancement of water resistance. Accordingly, in view of enhancement of the strength and size stability, the amount of the inorganic powder is preferably 70% by weight or more in 100% by weight of the resin composition according to the present invention. Particularly, when the amount of the inorganic powder is 70% by weight or more, the size stability of the molded article is significantly enhanced.

More specifically, in the case where the resin composition according to the present invention contains 60% by weight or more of the inorganic powder, the resin composition according to the present invention has favorable moldability, and a molded article produced from the resin composition maintains high strength even in an environment where water is present. In addition, in the case where the resin composition according to the present invention contains 70% by weight or more of the inorganic powder, a molded article produced from the resin composition shows enough strength and enough size stability even under a sunshine condition of outdoors. Moreover, even in an environment where water is present, the strength thereof is kept high. Accordingly, the resin composition and the molded article according to the present invention are favorably used as an organic/inorganic composite resin composition and a molded product thereof which are required to have such properties.

When the above composition is employed in the present invention, especially when the amount of the inorganic powder is 70% by weight or more, the bending stress of the molded article measured in conformity with JIS K7171 can be 20 MPa or more, 25 MPa or more, and 30 MPa or more. Further, the coefficient of linear expansion of the molded article measured in conformity with JIS K7197 can be $10 \times 10^{-5}$/°C or less, and $8 \times 10^{-5}$/°C or less. Moreover, the surface of the molded article can be flawless and smooth.

The molded article produced from the resin composition according to the present invention is less likely to have the adhesion between the silane-modified polyolefin resin and the inorganic powder lowered even in an environment where water is present. In a conventional molded article produced from a maleic anhydride-modified resin, a bond between a resin component and an inorganic component is a hydrogen bond, and therefore the hydrogen bond is likely to be cleaved when water enters the interface. In contrast, in a molded article produced from a silane-modified polyolefin resin, a bond between a resin component and an inorganic component is presumably a chemical bond formed by dehydration condensation. Accordingly, the bond is less likely to be cleaved even when water enters the interface, so that the strength is kept high.

Also in the case where the resin composition according to the present invention contains a thermoplastic resin such as a recycled material of containers/packages, water resistance and moldability can be kept high. Additionally, use of a recycled material of containers/packages significantly lowers cost of the molded articles, allows effective use of resources, and greatly reduces the environmental load.

The inorganic powder is used as a filler of a molded article. The inorganic powder is fly ash or incineration ash of sludge. Each of the inorganic powders may be used alone, or two or more of these may be used in combination. Examples of the incineration ash of sludge include "super ash" (trade name) from Tokyo Metropolitan Sewerage Service Corporation.

In view of further enhancement of the strength, size stability, and water resistance, the inorganic powder is fly ash or incineration ash of sludge, and preferably fly ash. The fly ash is defined in JIS A6201-1999. The fly ash contains 40% by weight or more of silicon dioxide. The incineration ash of sludge commonly contains silicon dioxide. The fly ash and the incineration ash of sludge each commonly contain aluminum oxide. The fly ash and the incineration ash of sludge are combustion ash obtainable by burning coals or sludge. The inorganic powder is preferably combustion ash.

A large amount of the fly ash is produced in a steam power plant. The fly ash and the incineration ash of sludge are inexpensive because they are not reconverted into resources sufficiently. For the purpose of reduction in environmental load, effective use of fly ash and incineration ash of sludge is desired. Additionally, since being fine spherical powder, fly ash has great flowability when molten in or mixed with a thermoplastic resin. Accordingly, fly ash can be densely filled in a resin composition. A high fill content of inorganic fillers such as fly ash enables to further enhance the strength, size stability, moldability, and water resistance in a balanced manner.

The amount of the inorganic powder is not particularly limited as long as it is 60% by weight or more in 100% by weight of the resin composition according to the present invention. The amount of the inorganic powder is appropriately adjusted in accordance with the kind of the inorganic powder, and the kind of a silane-modified polyolefin resin. In view of further enhancement of the strength, size stability, moldability, and water resistance, the amount of the inorganic powder is preferably 70% by weight or more, more preferably 75% by weight or more, and particularly preferably 80% by weight or more in 100% by weight of the resin composition. The larger the amount of the inorganic powder, the lower the coefficient of linear expansion of the molded article. Accordingly, the larger amount of the inorganic powder is preferable in production of long molded articles used outdoors such as deck materials. Additionally, if the amount of the inorganic powder is larger, dice scraps derived from the silane-modified polyolefin resin are more likely to be scooped out by inorganic powder. As a result, accumulation of dice scraps is suppressed and favorable moldability is obtained.

In view of favorable moldability, the amount of the inorganic powder is preferably 95% by weight or less, more preferably 90% by weight or less, and most preferably 85% by weight or less in 100% by weight of the resin composition. In the case where another thermoplastic resin (e.g., recycled materials of containers/packages mentioned later) other than the silane-modified polyolefin resin is used, the amount of the inorganic powder is preferably, for example, 90% by weight or less in 100% by weight of the resin composition.

The silane-modified polyolefin resin is a resin obtained by modifying a polyolefin with a silane compound. Favorable examples of the silane-modified polyolefin resin include a silane graft-modified polyolefin resin that is obtained by mixing a polyolefin, a silane compound, and a peroxide at a temperature higher than the melting point of the polyolefin so as to graft the silane compound to the polyolefin, and a silane-copolymerized polyolefin that is obtained by copolymerization of ethylene and an ethylenically unsaturated silane compound. With regard to the silane-modified polyolefin resin, a silane compound may be used in preparation of a polyolefin resin by polymerization or may be reacted with the polyolefin resin prepared by the polymerization.

Favorable examples of the silane graft-modified polyolefin resin include "LINKLON" from Mitsubishi Chemical Corporation. Favorable examples of the silane copolymerized polyolefin include "HE2545" from Borealis.

Favorable examples of the silane compound used in synthesis of the silane graft-modified polyolefin resin include vinyl triethoxysilane, vinyl trimethoxysilane, and vinyl methyl dimethoxysilane.

Favorable examples of the polyolefin used in synthesis of the silane graft-modified polyolefin resin include polyethylene, polypropylene, ethylene-vinyl acetate copolymers, and ethylene-$\alpha$-olefin copolymers.

The ethylene-$\alpha$-olefin copolymer is particularly preferably a copolymer obtained by copolymerizing ethylene with an $\alpha$-olefin such as propylene, 1-buthene, 1-pentene, 1-hexene, 4-methyl-1-pentene, and 1-octene at a ratio of several mol%.

The ethylenically unsaturated silane compound used in synthesis of the silane copolymerized polyolefin is particularly preferably vinyl trimethoxysilane, vinyl triethoxysilane, vinyl acetoxysilane, or $\gamma$-methacryloxy propylmethyl dimethoxysilane.

The amount of the silane-modified polyolefin resin in 100% by weight of the resin composition according to the present invention is 1% by weight or more but 40% by weight or less. The amount of the silane-modified polyolefin resin is appropriately adjusted in accordance with the kind of the inorganic powder and the kind of the silane-modified polyolefin resin. In 100% by weight of the resin composition, the amount of the silane-modified polyolefin resin is 1% by weight or more, more preferably 1.5% by weight or more, and still more preferably 3.5% by weight or more. In 100% by weight of the resin composition, the amount of the silane-modified polyolefin resin is preferably 30% by weight or less, more preferably 10% by weight or less, and still more preferably 5% by weight or less. If the amount of the silane-modified polyolefin resin satisfies the above lower limit, the adhesion between the silane-modified polyolefin resin and the inorganic powder is further enhanced, resulting in further enhancement in the water resistance and strength. If the amount of the silane-modified polyolefin resin satisfies the above upper limit, cost for the resin composition decreases. If the amount of the silane-modified polyolefin resin exceeds the above upper limit, the effect worth the cost increase is not likely to be achieved.

The resin composition according to the present invention may contain, as a resin component other than the silane-modified polyolefin resin, other thermoplastic resin (s) other than the silane-modified polyolefin resin, in addition to the silane-modified polyolefin resin.

Favorable examples of the other thermoplastic resin(s) include polyethylene, polypropylene, chlorinated polyethylene, ethylene-vinyl acetate copolymers (EVA), ethylene-ethyl actylate copolymers (EEA), and ethylene-propylene copolymers. Each of these thermoplastic resins may be used alone, or two or more of these may be used in combination.

The other thermoplastic resin(s) may be unused thermoplastic resin(s) or recovered resin(s) such as recycled materials of containers/packages. The other thermoplastic resin(s) are preferably polyolefin resin(s) other than the silane-modified polyolefin resin. The other thermoplastic resin(s) are preferably polyolefin resin(s) other than unsaturated carboxylic acid-modified polyolefin resins.

In the case where the silane-modified polyolefin resin and the other thermoplastic resin(s) are used in combination, the amount of the other thermoplastic resin (s) in total is preferably 1% by weight or more, more preferably 1.5% by weight or more, and still more preferably 3.5% by weight or more in 100 % by weight of the resin composition. The amount of the other thermoplastic resin (s) in total is preferably 35% by weight or less, more preferably 30% by weight or less, still more preferably, 20% by weight or less, particularly preferably 10% by weight or less, and most preferably 5% by weight or less in 100 % by weight of the resin composition.

In view of reduction in environmental load and reduction in cost for the resin composition, the resin composition according to the present invention preferably contains recycled materials of containers/packages. The recycled materials of containers/packages are obtained from plastic trash collected by local governments and are mixtures mainly containing thermoplastic resins such as polyolefin resins. Commonly, the recycled materials of containers/packages mainly contain a thermoplastic resin mixture. Here, the recycled materials of containers/packages herein do not include recycled materials of containers/packages mainly containing a PET resin.

The plastic trash is first subjected to various treatments such as separation and washing, then granulated or pelletized, and finally molded.

In the separation, PET, polystyrene, and inorganic materials (metals) are eliminated as much as possible so that mixtures mainly containing polyolefin resins are obtained. The resulting materials are used as recycled materials of containers/packages. Commonly, resins floating upon water after washing and crushing of plastic trash are used.

An example of the recycled materials of containers/packages contains, for example, 30 to 70% by weight of polyethylene, 20% by weight or more but 60% by weight or less of polypropylene, 2 to 30% by weight of polystyrene. The present inventors analyzed 10 pieces of recycled materials of containers/packages to find out any of these 10 recycled materials of containers/packages contained 40 to 60% by weight of polyethylene, 30 to 50% by weight of polypropylene, and 2 to 20% by weight of polystyrene. The other thermoplastic resin (s) may include a thermoplastic resin containing 30 to 70% by weight of polyethylene, 20 to 60% by weight of polypropylene, and 2 to 30% by weight of polystyrene. Also, the other thermoplastic resin(s) may include a thermoplastic resin containing 40 to 60% by weight of polyethylene, 30 to 50% by weight of polypropylene, and 3 to 20% by weight of polystyrene.

The resin composition according to the present invention may contain a polyolefin having a density higher than the density of the whole resins of the silane-modified polyolefin resin and the recycled materials of containers/ packages, as a reinforcing component of the polyolefin based resin. Such a polyolefin further stabilize the physical properties of the molded article. The resin composition preferably contains a high-density polyolefin resin.

The resin composition according to the present invention is molded to give a molded article. The molded article is a molded article obtained by molding a resin composition. The resin composition according to the present invention is a resin composition for obtaining a molded article used as deck materials. The molding method is not particularly limited, and the molded article may be molded by a conventionally known molding method. The molded article may be obtained from the resin composition of the present invention by the extrusion molding method or a molding method other than the extrusion molding method. The shape and nature of the molded article (e.g., plate shape or not, single layer or multilayer) are not particularly limited.

An embodiment of the present invention is described based on Example 1. In the following, for specific description of the present invention, examples of the present invention and comparative examples for comparison with the examples are shown. The present invention is not limited only to the examples.

The following materials were used in the examples and comparative examples.

(Inorganic powder)

(1) Fly ash class I (JIS I class, product of Yonden Business Co., Inc., FINASH (trade name), containing 65% by weight of silicon dioxide, 20% by weight of aluminum oxide, and 2% by weight of calcium oxide)
(2) Fly ash class II (JIS II class, product of Yonden Business Co., Inc., containing 65% by weight of silicon dioxide, 20% by weight of aluminum oxide, and 2% by weight of calcium oxide)
(3) Talc (product of Nippon Talc Co., Ltd., SW (trade name), containing 65% by weight of silicon dioxide)
(4)Incineration ash of sludge (Super ash, product of Tokyo Metropolitan Sewerage Service Corporation, containing 35% by weight of silicon dioxide, 19% by weight of aluminum oxide, and 12% by weight of calcium oxide)

(Polyolefin resin)

(1) Polyethylene (HDPE) (product of Asahi Kasei Chemicals Corporation, SUNTEC(R) thermoplastic resin HDJ340 (trade name))
(2) Recycled materials of containers/packages (obtained from plastic trash collected by local government, containing 51% by weight of polyethylene, 46% by weight of polypropylene, 3% by weight of polystyrene)

(Silane-modified polyolefin resin)

(1) Silane graft-modified polyethylene (product of Mitsubishi Chemical Corporation, LINKLON XHE740 N (trade name))

(Unsaturated carboxylic acid-modified polyolefin resin)

(1) MAPE 1 (unsaturated carboxylic acid-modified polyolefin resin, product of Mitsubishi Chemical Corporation, MODIC)
(2) MAPE 2 (unsaturated carboxylic acid-modified polyolefin resin, product of Sanyo Chemical Industries, Ltd., U-MEX 2000 (trade name))

(Example 1)

Silane graft-modified polyethylene (product of Mitsubishi Chemical Corporation, LINKLON XHE 740 N (trade name)) (5 parts by weight), Fly ash class I (JIS I class, product of Yonden Business Co., Inc., FINASH (trade name)) (85 parts by weight) that is inorganic powder, and a recycled material of containers/packages (10 parts by weight) obtained from plastic trash collected by local government as a thermoplastic resin were blended. The mixture was molten and kneaded using a Laboplasto mill (type: KF 100 rotor, kneading in the same direction, product of TOYO SEIKI SEISAKU-SHO, LTD.) at 200°C and at 15 rpm to give a bulk molten kneaded mass.

The resulting molten kneaded mass was heated at 220 °C and pressurized at 200 kg/cm$^2$ in a hot press. The resulting mass was pressurized at 200 kg/cm$^2$ while being cooled in a cold press to give a plate-shaped molded article having a 100-mm square shape.

(Examples 2 to 6)

Plate-shaped molded articles were produced in the same manner as in Example 1, except that a recycled material of containers/packages obtained from plastic trash collected by local governments and polyethylene (HDPE) (product of Asahi Kasei Chemicals Corporation, SUNTEC(R) thermoplastic resin HDJ340 (trade name)) were used together as thermoplastic resins, and that the amounts of the thermoplastic resins, the silane-modified polyolefin resin used in Example 1, and the inorganic powder used in Example 1 were set as shown in Table 1.

(Example 7)

A plate-shaped molded article was produced in the same manner as in Example 1, except that Fly ash class II (JIS II class, product of Yonden Business Co., Inc.) was used as the inorganic powder instead of Fly ash class I (JIS I class, product of Yonden Business Co., Inc., FINASH (trade name)), that a recycled material of containers/packages obtained from plastic trash collected by local governments and polyethylene (HDPE) (product of Asahi Kasei Chemicals Corporation, SUNTEC (R) thermoplastic resin HDJ340 (trade name)) were used together as thermoplastic resins , and that the amounts of the inorganic powder, the thermoplastic resins, and the silane-modified polyolefin resin used in Example 1 were set as shown in Table 1.

(Example 8)

A plate-shaped molded article was produced in the same manner as in Example 1, except that Fly ash class II (JIS II class, product of Yonden Business Co., Inc.) was used instead of Fly ash class I (JIS I class, product of Yonden Business Co., Inc., FINASH (trade name)) as the inorganic powder, and that polyethylene (HDPE)(product of Asahi Kasei Chemicals Corporation, SUNTEC(R) thermoplastic resin HDJ340 (trade name), thermoplastic resin) was used instead of the recycled material of containers/packages obtained from plastic trash collected by local governments as the thermoplastic resin.

(Comparative Example 1)

A plate-shaped molded article was produced in the same manner as in Example 1, except that MAPE 1 (unsaturated carboxylic acid-modified polyolefin resin, product of Mitsubishi Chemical Corporation, MODIC) was used instead of the silane graft-modified polyethylene (product of Mitsubishi Chemical Corporation, LINKLON XHE 740 N (trade name)), and that the amounts of the MAPE 1, the inorganic powder used in Example 1, and the recycled material of containers/packages used in Example 1 were set as shown in Table 3.

(Comparative Example 2)

A Plate-shaped molded article was produced in the same manner as in Example 1, except that MAPE 1 (unsaturated carboxylic acid-modified polyolefin resin, product of Mitsubishi Chemical Corporation, MODIC) was used instead of the silane graft-modified polyethylene (product of Mitsubishi Chemical Corporation, LINKLON XHE 740 N (trade name)), and that polyethylene (HDPE)(product of Asahi Kasei Chemicals Corporation, SUNTEC(R) thermoplastic resin HDJ340 (trade name)) was used instead of the recycled material of containers/packages obtained from plastic trash collected by local governments as the thermoplastic resin, and that the amounts of the unsaturated carboxylic acid-modified polyolefin resin, the polyethylene (HDPE), and the inorganic powder used in Example 1 were set as shown in Table 3.

(Comparative Example 3)

A plate-shaped molded article was produced in the same manner as in Example 1, except that the silane-modified polyolefin resin was not used, and that the amount of the recycled material of containers/packages was changed from 10 parts by weight to 15 parts by weight.

(Examples 9 15 and 17 to 19, Comparative Examples 4 to 10 and Reference Example 16)

Plate-shaped molded articles were produced in the same manner as in Example 1, except that the kind and the amounts of the formulations were changed as shown in Tables 1 to 3.

(Evaluation)

(1) Dry strength (Bending strength)

Test samples were cut out from the obtained molded articles, and the bending strength thereof was measured in conformity with JIS K 7171. In an isothermal room at 23 ± 2°C, the bending strength of five test samples was measured under the following conditions of the sample size and measurement. The average value was regarded as the dry strength.
Sample size: 80.0 mm ± 2.0 mm in length, 10.0 mm ± 0.2 mm in width, 4.0 mm ± 0.2 mm in thickness
Distance between supporting points: 68 mm
Crosshead speed: 3 mm/min.

(2) Size stability during heating: Measurement of the coefficient of linear expansion

Test samples were cut out from the obtained molded articles, and the coefficient of linear expansion thereof was measured in conformity with JIS K 7197. In an isothermal room at 23 ± 2°C, the coefficient of linear expansion of three samples was measured under the following conditions of the sample size and the measurement. The average value was regarded as the coefficient of linear expansion.

Sample size: 5-mm square column having a length of 8 mm
Temperature range of measurement: cold-side temperature of 23°C, hot-side temperature of 55°C
Rate of temperature rise: 5°C/min.

(3) Water resistance: measurement of strength retention rate after immersion in water

Test samples similarly prepared as in the measurement of the dry strength were immersed in conditioned water in an isothermal room at 23 ± 2°C for seven days. After immersion, water on the surfaces of the test samples were quickly wiped, so that test samples used in a bend test after immersion in water were prepared.
Immersion in water is performed as follows. The test sample was placed on a 60-mesh sieve in water and another 60-mesh sieve was set thereon. The test sample was 10 to 20 mm under water for seven days.
The bending strength of the test sample after immersion in water was measured in the same manner as in the measurement of the dry strength, and the measured value was regarded as the strength after immersion in water. The retention rate of the strength after immersion in water was calculated using the following equation. The retention rate of the strength after immersion in water is preferably 80% or more, more preferably 90% or more, and still more preferably 95% or more.

$$\text{Retention rate of the strength after immersion in water}$$
$$(\%) = \text{Strength after immersion in water} / \text{Dry strength} \times 100$$

Tables 1 to 3 show the results. The molded articles obtained in Examples 1 to 19 were favorably molded without flaws and cracks.

[Table 1]

[Table 2]

| | | | Unit | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Formulations | Inorganic powder | (1) Fly ash class I | Parts by weight | 85 | 85 | 85 | 85 | 85 | 85 | | | 85 | 85 |
| | | (2) Fly ash class II | | | | | | | | 85 | 85 | | |
| | | (3) Talc | | | | | | | | | | | |
| | | (4) Incineration ash of sludge | | | | | | | | | | | |
| | Polyolefin resin | (1) Polyethylene (HDPE) | | | 5 | 7 | 6 | 5 | 5 | 5 | 10 | 10 | 11.5 |
| | | (2) Recycled material of containers/packages | | 10 | 5 | 5 | 5 | 7 | 6 | 5 | | | |
| | Silane-modified polyolefin resin | (1) Silane graft-modified polyethylene | | 5 | 5 | 3 | 4 | 3 | 4 | 5 | 5 | 5 | 3.5 |
| | Unsaturated carboxylic acid-modified polyolefin resin | (1)MAPE1 | | | | | | | | | | | |
| | | (2)MAPE2 | | | | | | | | | | | |
| Performance evaluation | Bending strength | Before immersion in water | MPa | 35 | 46 | 48 | 50 | 42 | 49 | 47 | 53 | 53 | 55 |
| | | After immersion in water for 7 days | MPa | 35 | 45 | 48 | 48 | 42 | 47 | 45 | 53 | 48 | 44 |
| | | Retention rate of the strength after immersion in water | % | 100 | 98 | 100 | 96 | 100 | 96 | 95 | 100 | 89 | 80 |
| | Coefficient of linear expansion | | ×10⁻⁶/°C | 4 | 3 | 3 | 3 | 3 | 3 | 3 | 3 | 3 | 3 |

9

EP 2 623 555 B1

| | | | Unit | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|---|
| Formulations | Inorganic powder | (1) Fly ash class I | Parts by weight | 90 | 70 | 70 | 80 | 80 | | | 60 | 60 |
| | | (2) Fly ash class II | | | | | | | | | | |
| | | (3) Talc | | | | | | | 80 | | | |
| | | (4) Incineration ash of sludge | | | | | | | | 80 | | |
| | Polyolefin resin | (1) Polyethylene (HDPE) | | 5 | 25 | | 19 | 18.5 | 15 | 15 | 35 | 20 |
| | | (2) Recycled material of containers/packages | | | | | | | | | | |
| | Silane–modified polyolefin resin | (1) Silane graft–modified polyethylene | | 5 | 5 | 30 | 1 | 1.5 | 5 | 5 | 5 | 20 |
| | Unsaturated carboxylic acid–modified polyolefin resin | (1)MAPE1 | | | | | | | | | | |
| | | (2)MAPE2 | | | | | | | | | | |
| Performance evaluation | Bending strength | Before immersion in water | MPa | 43 | 44 | 43 | 52 | 55 | 28 | 49 | 37 | 36 |
| | | After immersion in water for 7 days | MPa | 40 | 36 | 37 | 44 | 50 | 28 | 46 | 36 | 33 |
| | | Retention rate of the strength after immersion in water | % | 93 | 81 | 87 | 83 | 91 | 99 | 93 | 97 | 92 |
| | Coefficient of linear expansion | | $\times 10^{-5}/°C$ | 2 | 8 | 8 | 6 | 6 | 6 | 6 | 10 | 10 |

10

[Table 3]

| | | Unit | Comp.Ex. 1 | Comp.Ex. 2 | Comp.Ex. 3 | Comp.Ex. 4 | Comp.Ex. 5 | Comp.Ex. 6 | Comp.Ex. 7 | Comp.Ex. 8 | Comp.Ex. 9 | Comp.Ex. 10 |
|---|---|---|---|---|---|---|---|---|---|---|---|---|
| Formulations | Inorganic powder | (1) Fly ash class I | Parts by weight | 85 | 85 | 85 | 85 | 85 | 80 | | | | 70 |
| | | (2) Fly ash class II | | | | | | | | | | 85 | |
| | | (3) Talc | | | | | | | | | 80 | | |
| | | (4) Incineration ash of sludge | | | | | | | | 80 | | | |
| | Polyolefin resin | (1) Polyethylene (HDPE) | | 11.5 | 13 | | 13 | 15 | 20 | 20 | 20 | 15 | 30 |
| | | (2) Recycled material of containers/packages | | | | 15 | | | | | | | |
| | Silane-modified polyolefin resin | (1) Silane graft-modified polyethylene | | | | | | | | | | | |
| | Unsaturated carboxylic acid-modified polyolefin resin | (1) MAPE1 | | 3.5 | 2 | | | | | | | | |
| | | (2) MAPE2 | | | | | 2 | | | | | | |
| Performance evaluation | Bending strength | Before immersion in water | MPa | 36 | 57 | 20 | 39 | 27 | 40 | 30 | 33 | 17 | 25 |
| | | After immersion in water for 7 days | MPa | 26 | 14 | 9 | 18 | 11 | 13 | 20 | 17 | 9 | 19 |
| | | Retention rate of the strength after immersion in water | % | 72 | 25 | 45 | 46 | 41 | 34 | 66 | 52 | 57 | 77 |
| | Coefficient of linear expansion | | ×10⁻⁶/°C | 4 | 3 | 3 | 3 | 3 | 6 | 6 | 6 | 4 | 8 |

Claims

1. A resin composition comprising:

inorganic powder; and
a silane-modified polyolefin resin,
wherein the inorganic powder is fly ash or incineration ash of sludge,
an amount of the inorganic powder being fly ash or incineration ash of sludge is 60% by weight or more, and
an amount of the silane-modified polyolefin resin is 1% by weight or more but 40% by weight or less.

2. The resin composition according to Claim 1, wherein the amount of the inorganic powder being fly ash or incineration ash of sludge is 70% by weight or more, and the amount of the silane-modified polyolefin resin is 1% by weight or more but 30% by weight or less.

3. The resin composition according to Claim 1 or 2, being a resin composition for obtaining a molded article used as deck materials.

4. A molded article obtainable by molding the resin composition according to any one of Claims 1 to 3.

5. The molded article according to Claim 4 being deck materials.


**Patentansprüche**

1. Harzzusammensetzung, umfassend:

   anorganisches Pulver; und
   ein Silan-modifiziertes Polyolefinharz,
   wobei das anorganische Pulver Flugasche oder Schlammverbrennungsasche ist, wobei eine Menge des anorganischen Pulvers, bei dem es sich um Flugasche oder Schlammverbrennungsasche handelt, 60 Gew.-% oder mehr beträgt, und eine Menge des Silan-modifizierten Polyolefinharzes 1 Gew.-% oder mehr, jedoch 40 Gew.-% oder weniger beträgt.

2. Harzzusammensetzung nach Anspruch 1, wobei die Menge des anorganischen Pulvers, bei dem es sich um Flugasche oder Schlammverbrennungsasche handelt, 70 Gew.-% oder mehr beträgt, und die Menge des Silan-modifizierten Polyolefinharzes 1 Gew.-% oder mehr, jedoch 30 Gew.-% oder weniger beträgt.

3. Harzzusammensetzung nach Anspruch 1 oder 2, bei der es sich um eine Harzzusammensetzung zur Erzielung eines Formartikels, der als Bodenmaterial verwendet wird, handelt.

4. Formartikel, erhältlich durch Formen der Harzzusammensetzung gemäß mindestens einem der Ansprüche 1 bis 3.

5. Formartikel nach Anspruch 4, bei dem es sich um Bodenmaterialien handelt.


**Revendications**

1. Une composition de résine comprenant:

   de la poudre inorganique; et
   une résine de polyoléfine modifiée par du silane,
   dans laquelle la poudre inorganique est de la cendre volante ou de la cendre d'incinération de boue,
   une quantité de la poudre inorganique étant de la cendre volante ou de la cendre d'incinération de boue est 60% en poids ou plus, et
   une quantité de résine de polyoléfine modifiée par du silane est 1% en poids ou plus, mais 40% en poids ou moins.

2. La composition de résine selon la revendication 1,
   dans laquelle la quantité de la poudre inorganique étant de la cendre volante ou de la cendre d'incinération de boue est 70% en poids ou plus, et la quantité de la résine de polyoléfine modifiée par du silane est 1% en poids ou plus, mais 30% en poids ou moins.

3. La composition de résine selon la revendication 1 ou 2, étant une composition de résine pour obtenir un article moulé utilisé en tant que matériaux de pont.

4. Un article moulu obtenu en moulant la composition de résine selon l'une quelconque des revendications 1 à 3.

5. L'article moulu selon la revendication 4 étant du matériau de pont.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005098427 A
- JP 2006142755 A
- EP 1464667 A

- JP 2007138137 A
- JP H061994210796 A
- JP 2000263630 A